(19) Europäisches Patentamt
European Patent Office
Office européen des brevets

(11) EP 1 924 727 B1

(12) # FASCICULE DE BREVET EUROPEEN

(45) Date de publication et mention de la délivrance du brevet:
**17.08.2011 Bulletin 2011/33**

(21) Numéro de dépôt: **06793564.3**

(22) Date de dépôt: **15.09.2006**

(51) Int Cl.:
***D01F 11/16*** *(2006.01)* ***D06M 14/36*** *(2006.01)*
***C08J 5/06*** *(2006.01)* ***C08J 5/24*** *(2006.01)*

(86) Numéro de dépôt international:
**PCT/EP2006/066418**

(87) Numéro de publication internationale:
**WO 2007/031576 (22.03.2007 Gazette 2007/12)**

(54) **PROCEDE POUR AMELIORER L'ADHERENCE DE FIBRES DE CARBONE VIS-A-VIS D'UNE MATRICE ORGANIQUE**

VERFAHREN ZUR VERBESSERUNG DER HAFTUNG VON CARBONFASERN AN EINER ORGANISCHEN MATRIX

METHOD FOR ENHANCING ADHERENCE OF CARBON FIBERS WITH RESPECT TO AN ORGANIC MATRIX

(84) Etats contractants désignés:
**DE ES IT**

(30) Priorité: **16.09.2005 FR 0552791**

(43) Date de publication de la demande:
**28.05.2008 Bulletin 2008/22**

(73) Titulaires:
- **ASTRIUM SAS**
  **75016 Paris (FR)**
- **UNIVERSITE DES SCIENCES ET TECHNOLOGIES DE LILLE**
  **59655 Villeneuve-d'Ascq Cedex (FR)**

(72) Inventeurs:
- **DEFOORT, Brigitte**
  **F-33160 SAINT MEDARD EN JALLES (FR)**
- **PONSAUD, Philippe**
  **F-75013 Paris (FR)**
- **COQUERET, Xavier**
  **F-51100 Reims (FR)**

(74) Mandataire: **Ilgart, Jean-Christophe et al**
**BREVALEX**
**95 rue d'Amsterdam**
**75378 Paris Cedex 8 (FR)**

(56) Documents cités:
**FR-A- 2 129 906 GB-A- 1 382 402**

- **DATABASE WPI Section Ch, Week 200451 Derwent Publications Ltd., London, GB; Class A82, AN 2004-528117 XP002386136 & JP 2004 183127 A (ACHILLES CORP KK) 2 juillet 2004 (2004-07-02)**
- **TSUBOKAWA N: "CATIONIC GRAFT POLYMERIZATION OF POLYMERS FROM CARBON FIBER INITIATED BY ACYLIUM PERCHLORATE GROUPS INSTRODUCED ONTO THE SURFACE" CARBON, ELSEVIER, OXFORD, GB, vol. 31, no. 8, janvier 1993 (1993-01), pages 1257-1263, XP000420951 ISSN: 0008-6223**
- **GARDNER S D ET AL: "Grafting isocyanate-terminated elastomers onto the surfaces of carbon fibers: reaction of isocyanate with acidic surface functions" CARBON, ELSEVIER, OXFORD, GB, vol. 34, no. 1, 1996, pages 59-67, XP004022393 ISSN: 0008-6223**
- **PITTMAN C U ET AL: "Reactivities of amine functions grafted to carbon fiber surfaces by tetraethylenepentamine. Designing interfacial bonding" CARBON, ELSEVIER, OXFORD, GB, vol. 35, no. 7, 1997, pages 929-943, XP004083042 ISSN: 0008-6223**
- **YOSHIKAWA S ET AL: "GRAFTING OF POLYMERS WIHT CONTROLLED MOLECULAR WEIGHT ONTO INORGANIC FIBER SURFACE BY TERMINATION OF LIVING POLYMER CATION WITH AMINO GROUP ON THE SURFACE" COMPOSITE INTERFACES, VSP,UTRECHT, NL, vol. 6, no. 5, 1999, pages 395-407, XP000870982 ISSN: 0927-6440**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 924 727 B1

## Description

DOMAINE TECHNIQUE

La présente invention se rapporte à un procédé permettant d'améliorer l'adhérence de fibres de carbone vis-à-vis d'une matrice organique formant avec ces fibres un matériau composite et résultant de la polymérisation en chaîne d'une résine durcissable.

Ce procédé, qui permet d'obtenir des matériaux composites aux propriétés remarquables de résistance aux sollicitations, tant transverses (c'est-à-dire perpendiculaires au sens des fibres de carbone) que longitudinales (c'est-à-dire dans le sens des fibres de carbone), trouve un intérêt tout particulier dans les industries aéronautique, aérospatiale, ferroviaire, navale et automobile, que ce soit pour la réalisation de pièces de structure, de moteur, d'habitacle ou de carrosserie.

Toutefois, il peut également être utilisé dans d'autres types d'industrie comme l'industrie de l'armement, par exemple pour la réalisation de pièces entrant dans la constitution de missiles ou de tubes lance-missiles, ou celle des articles de sports et de loisirs, par exemple pour la réalisation d'articles destinés aux sports nautiques et de glisse.

ÉTAT DE LA TECHNIQUE ANTÉRIEURE

Les matériaux composites sont des matériaux hétérogènes qui permettent d'exploiter les propriétés mécaniques exceptionnelles de matériaux que l'on ne sait pas fabriquer sous forme massive mais seulement sous forme de fibres en les noyant dans une matrice formée d'un polymère organique (ou résine) durci, qui permet de lier les fibres entre elles, d'assurer une répartition des contraintes dans le matériau composite et de protéger les fibres contre les agressions chimiques.

Une condition indispensable à l'obtention d'un matériau composite à hautes performances est que la liaison entre les fibres et la matrice qui le constituent soit bonne. En effet, si la liaison fibres/ matrice est insuffisante, alors on obtient un matériau composite aux propriétés mécaniques transverses (comme la résistance au cisaillement) médiocres et, donc, aux possibilités d'utilisation très limitées, les pièces en matériaux composites étant le souvent destinées à travailler en état de contrainte tridirectionnelle.

Le carbone est chimiquement peu réactif et présente naturellement une faible adhérence vis-à-vis des matrices polymériques. Aussi, les fabricants de fibres de carbone ont-ils cherché d'emblée à adapter leurs fibres aux résines destinées à être utilisées comme matrices par les fabricants de pièces en matériaux composites.

C'est ainsi qu'il a été proposé :

1°) des traitements de surface qui visent tous à créer à la surface des fibres des groupes fonctionnels aptes à réagir avec des fonctions chimiques portées par les résines ; il s'agit principalement de traitements d'oxydation chimique ou électrolytique (voir par exemple, JP-A-3076869 [1]) mais d'autres types de traitement ont également été décrits comme des traitements thermiques par plasma (voir, par exemple, EP-A-1 484 435 [2]), une électrolyse en milieu acide ou basique (EP-A-0 640 702 [3]) ou encore l'implantation d'atomes de type Si ou B (JP-B-2002327374 [4]) ;

2°) l'utilisation d'ensimages spécifiques, c'est-à-dire par le dépôt sur la surface des fibres de produits dont le rôle est d'augmenter la compatibilité des fibres vis-à-vis des résines, de faciliter leur imprégnation par les résines et d'assurer un *"accrochage"* entre les fibres et les matrices formées par la polymérisation de ces résines ; d'une manière générale, les agents d'ensimage utilisés sont des polymères ou copolymères aux structures chimiques complexes et dont le choix est principalement guidé par l'expérience ; et

3°) le greffage sur la surface des fibres d'une phase élastomérique (Wu et al., Carbon, 34, 59-67, 1996 [5]) ou de polymères de type polyesters, polymères vinyliques (polystyrène notamment) ou polyacétals (Tsubokawa, Carbon, 31, 1 257-1 263, 1993 [6]) susceptibles, là également, d'augmenter la compatibilité des fibres vis-à-vis des résines.

Il est à noter que des ensimages sont également utilisés sur les fibres de carbone dans d'autres buts que celui d'améliorer leur liaison avec une matrice organique comme, par exemple, celui de faciliter leur manipulation.

Si les traitements évoqués ci-dessus sont, d'une manière générale, relativement efficaces dans le cas de matrices obtenues par polymérisation thermique de résines (c'est-à-dire induite par la chaleur), il s'avère qu'ils ne le sont pas, ou insuffisamment, lorsque les matrices sont réalisées avec des résines dont la polymérisation est induite par un rayonnement lumineux (lumière visible ou ultraviolette) ou ionisant (rayonnement $\beta$, y ou rayons X) .

En effet, l'expérience montre que les composites obtenus avec des résines polymérisées sous rayonnement présentent des performances mécaniques transverses nettement inférieures à celles des meilleurs composites réalisés avec des résines polymérisées par voie thermique, ce qui est classiquement interprété comme le fait que la liaison fibres/matrice reste insuffisante en dépit des traitements appliqués aux fibres de carbone par leurs fabricants.

Or, la polymérisation de résines sous rayonnement présente, par ailleurs, un certain nombre d'avantages par

rapport à la polymérisation de résines par voie thermique, ces avantages étant notamment liés à la possibilité de travailler sans autoclaves et, donc, de fabriquer plus aisément des pièces composites de grande taille ou de structure complexe, et d'obtenir des vitesses de polymérisation beaucoup plus élevées, ce qui permet des cadences de production supérieures pour des coûts inférieurs.

Les Inventeurs se sont donc fixé pour but de fournir un procédé qui permette d'améliorer l'adhérence de fibres de carbone vis-à-vis d'une matrice polymérique dans le cas où cette matrice est obtenue par polymérisation sous rayonnement d'une résine durcissable, et plus précisément d'une résine durcissable par polymérisation en chaîne puisque, en pratique, les résines aptes à polymériser sous rayonnement sont des résines dont la polymérisation s'effectue par un mécanisme en chaîne.

Ils se sont de plus fixé pour but que ce procédé soit applicable au plus grand nombre possible de types de fibres de carbone susceptibles d'être utilisés dans la fabrication de matériaux composites (fibres longues, fibres mi-longues, fibres courtes, fibres oxydées, fibres ensimées, etc).
Ils se sont en outre fixé pour but que les coûts de mise en oeuvre de ce procédé soient compatibles avec son exploitation à une échelle industrielle.

EXPOSÉ DE L'INVENTION

Ces buts et d'autres encore sont atteints par la présente invention qui propose un procédé pour améliorer l'adhérence de fibres de carbone vis-à-vis d'une matrice organique formant avec ces fibres un matériau composite, ce matériau composite étant obtenu par mise en contact des fibres avec une résine durcissable par polymérisation en chaîne, puis polymérisation de la résine, lequel procédé est caractérisé en ce qu'il comprend le greffage sur la surface des fibres, avant qu'elles ne soient mises en contact avec la résine, de groupes aptes à servir d'agents de transfert de chaîne pendant la polymérisation de ladite résine.

Les fibres de carbone telles qu'obtenues par les procédés conventionnels de pyrolyse de poly-acrylonitrile (PAN), de rayonne, de viscose, de brai et autres résidus pétroliers, sont composées chacune d'une multitude de monofilaments, lesquels peuvent être plus ou moins liés entre eux selon les traitements auxquels ont été soumises ces fibres au cours de leur fabrication.

De ce fait, dans ce qui précède et ce qui suit, on entend par *"surface des fibres"* aussi bien la surface des monofilaments eux-mêmes que la surface d'assemblages résultant de la liaison d'une pluralité de monofilaments entre eux. De la même façon, on entend par *"surface d'une fibre",* aussi bien la surface d'un monofilament que celle d'un assemblage résultant de la liaison de plusieurs monofilaments entre eux.

Par ailleurs, dans ce qui précède et ce qui suit, le terme *"polymérisation"* doit être compris comme comprenant non seulement la formation de chaînes polymères par liaison de monomères ou prépolymères entre eux, mais également la formation d'un réseau tridimensionnel par l'établissement de liaisons entre ces chaînes polymères, que l'on appelle communément réticulation.

Ainsi, selon l'invention, c'est en greffant sur la surface des fibres de carbone, avant que celles-ci n'entrent dans le processus de fabrication du matériau composite, des groupes organiques capables de jouer ultérieurement le rôle d'agents de transfert de chaîne pendant la polymérisation de la résine destinée à former la matrice organique du matériau composite, que l'on augmente l'adhérence de ces fibres vis-à-vis de cette matrice.

En l'état actuel de leurs travaux, les Inventeurs pensent que cette augmentation d'adhérence serait liée au fait que les groupes ainsi greffés sur la surface des fibres se transformeraient, au cours de la polymérisation de la résine, en centres actifs (c'est-à-dire en radicaux ou en ions selon que la polymérisation en chaîne est de type radicalaire ou de type ionique) par réaction avec des chaînes polymères en croissance, et que ces centres actifs seraient capables d'amorcer la formation de nouvelles chaînes polymères à partir de la surface des fibres, qui seraient alors liées de façon covalente à cette surface dès leur création.

En d'autres termes, la polymérisation de la résine déclencherait l'activation des groupes greffés sur la surface des fibres en centres actifs, cette activation s'accompagnant à la fois d'un contrôle de la polymérisation et de la création de liaisons covalentes entre les fibres et la matrice organique.

Ce mécanisme présumé peut être illustré schématiquement de la manière suivante :

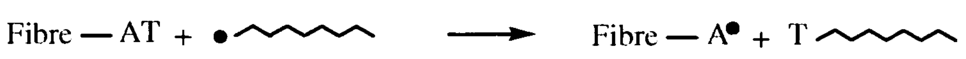


(a)

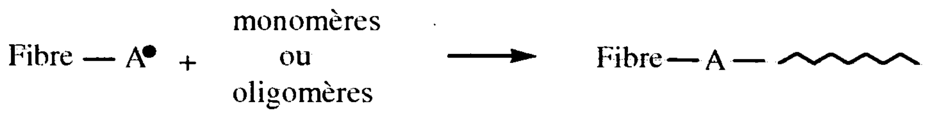

(b)

où :

AT représente un groupe servant d'agent de transfert de chaîne,  représente une chaîne polymère,
l'étape (a) illustre la transformation de ce groupe en centre actif, et
l'étape (b) illustre la formation d'une nouvelle chaîne polymère à partir de la surface de la fibre.

Conformément à l'invention, les groupes que l'on greffe sur la surface des fibres de carbone et qui sont, de préférence, tous identiques, peuvent être choisis parmi les nombreux groupes connus pour être aptes à servir d'agents de transfert de chaîne dans une polymérisation en chaîne, étant entendu que l'on retiendra, de préférence, celui ou ceux permettant d'obtenir une liaison fibres/matrice la plus satisfaisante possible, compte tenu de la résine durcissable devant être utilisée et/ou des conditions dans lesquelles cette dernière doit être polymérisée.

Pour ce faire, il est tout à fait possible d'évaluer l'effet de différents groupes sur l'adhérence de fibres de carbone vis-à-vis d'une matrice organique particulière et/ou pour des conditions de polymérisation particulières, par exemple en soumettant des fibres sur lesquelles on aura préalablement greffé l'un de ces groupes, à un test classiquement utilisé pour apprécier les propriétés mécaniques d'une interface fibres/matrice comme, par exemple, un test de déchaussement du type de celui décrit dans l'exemple 1 ci-après, et en comparant les résultats obtenus pour chaque groupe greffé.

Comme groupes aptes à servir d'agents de transfert de chaîne dans une polymérisation en chaîne, on peut notamment citer les groupes carbonés comprenant une fonction -I, -Br, -Cl, -F, -SH, -OH, -NH-, $-NH_2$, -PH-, $-PH_2$ ou =S ainsi que les groupes carbonés dénués d'hétéroatome mais pouvant donner lieu à un transfert radicalaire comme, par exemple, les groupes -CH allyliques ou benzyliques éventuellement substitués.

Il s'avère que, dans le cadre de leurs travaux, les Inventeurs ont constaté que le greffage de groupes carbonés comprenant une fonction thiol permet d'obtenir une amélioration particulièrement significative de l'adhérence de fibres de carbone en particulier vis-à-vis de matrices obtenues par polymérisation de résines époxy acrylates sous rayonnement ionisant. Aussi, les groupes carbonés à fonction thiol sont-ils ceux que l'on préfère greffer dans le cadre de la présente invention.

Par ailleurs, conformément à l'invention, le greffage sur la surface des fibres de carbone des groupes aptes à servir d'agents de transfert de chaîne est réalisé, d'une manière générale, en faisant réagir des groupes fonctionnels présents sur cette surface avec un composé qui génère, au cours de cette réaction, un groupe apte à servir d'agent de transfert de chaîne ou qui comprend un tel groupe, le choix de ce composé étant conditionné par le ou les types de groupes fonctionnels présents à la surface des fibres, qui sont eux-mêmes fonction du ou des traitements auxquels ont été soumises les fibres au cours ou à l'issue de leur fabrication.

Ainsi, par exemple, des fibres de carbone ayant subi une oxydation chimique ou électrolytique portent, en principe, des groupes oxygénés tels que des groupes hydroxyles, cétones, carboxyles ou éthers, tandis que des fibres de carbone ayant subi un ensimage portent, elles, le plus souvent des groupes époxydes.

Il est à noter qu'à défaut de pouvoir obtenir des précisions sur le ou les types de groupes fonctionnels portés par des fibres de carbone auprès de leur fabricant, il est possible d'apprécier l'état de surface de ces fibres par spectroscopie électronique pour l'analyse chimique (ESCA), encore connue sous le nom de spectroscopie photo-électronique des rayons X (XPS).

Selon un premier mode de mise en oeuvre préféré du procédé selon l'invention, le greffage sur la surface des fibres de carbone des groupes aptes à servir d'agents de transfert de chaîne est réalisé en faisant réagir des groupes fonctionnels présents à la surface de ces fibres avec un composé organique cyclique qui, par ouverture de cycle, se lie de façon covalente aux groupements fonctionnels des fibres et génère simultanément un groupe apte à servir d'agent de transfert de chaîne.

Ainsi, par exemple, dans le cas où l'on souhaite greffer des groupes carbonés à fonction thiol sur la surface de fibres de carbone oxydées qui comprennent notamment des groupes carboxyles, on réalise ce greffage en faisant réagir ces groupes carboxyles avec un épisulfure qui, par ouverture de cycle, se lie de façon covalente à une fonction carboxyle et génère simultanément un groupe à fonction thiol.

L'épisulfure est, par exemple, le sulfure de propylène, le sulfure d'éthylène, le sulfure de cyclohexène, l'épithiodécane, l'épithiododécane ou le 7-thiabicyclo[4.1.0]heptane, et la réaction est avantageusement réalisée à chaud (par exemple, à une température de l'ordre de 100°C), en présence d'un catalyseur, de préférence une amine tertiaire

telle que la triéthylamine.

Elle est, par ailleurs, avantageusement suivie d'une ou .plusieurs opérations de lavage des fibres, puis d'une ou plusieurs opérations de séchage desdites fibres, lesquelles peuvent être réalisées selon les procédures classiquement employées en matière de lavage et de séchage de fibres, et en particulier de fibres de carbone.

Selon un autre mode de mise en oeuvre préféré du procédé selon l'invention, le greffage sur la surface des fibres de carbone des groupes aptes à servir d'agents de transfert de chaîne est réalisé en faisant réagir des groupes fonctionnels présents à la surface de ces fibres avec un composé organique qui comporte une fonction chimique apte à réagir avec lesdits groupes fonctionnels, et un groupe apte à servir d'agent de transfert de chaîne.

Ainsi, par exemple, dans le cas où l'on souhaite greffer des groupes carbonés à fonction thiol sur la surface des fibres de carbone, on réalise ce greffage en faisant réagir les groupes fonctionnels présents à la surface de ces fibres avec un composé organique ayant une fonction chimique qui est choisie en fonction du ou des types de groupes fonctionnels présents à la surface des fibres, et un groupe comprenant une fonction thiol.

Pour des fibres ensimées riches en groupes époxydes, la fonction chimique est avantageusement une fonction carboxyle ou phénol, et la réaction est avantageusement réalisée à chaud (par exemple, à une température de 150°C), sous vide et en présence d'un catalyseur, de préférence une amine tertiaire comme le méthacrylate de diméthylaminoéthyle.

Un composé organique ayant à la fois une fonction carboxyle et un groupe à fonction thiol est, par exemple, l'acide thiomalique, l'acide thioglycolique, l'acide thiolactique, l'acide 3-mercaptopropionique, l'acide 11-mercaptoundécanoïque, l'acide 16-mercaptohexadécanoïque, l'acide 2-mercaptonicotinique, l'acide 6-mercaptonicotinique ou l'acide 2-mercapto-4-méthyl-5-thiazoleacétique, tandis qu'un composé ayant à la fois une fonction phénol et un groupe à fonction thiol est, par exemple, le 2-mercaptophénol, le 3-mercaptophénol, le 4-mercaptophénol ou le 4-thiouracyle.

En tout état de cause, il entre dans les compétences normales d'un homme du métier du domaine du couplage de fonctions chimiques de savoir déterminer, en fonction des groupes fonctionnels présents à la surface des fibres de carbone qu'il entend utiliser, quels sont les composés propres à lui permettre de greffer sur la surface de ces fibres les groupes de son choix, et de fixer les conditions dans lesquelles le greffage doit être réalisé pour être efficace, notamment en ce qui concerne les proportions relatives fibres de carbone/réactif(s)/catalyseur(s) devant être utilisées, ainsi que les paramètres de température et de pression nécessaires au bon déroulement de ce greffage.

Conformément à l'invention, la résine durcissable peut être choisie parmi toutes les résines qui sont aptes à durcir par un mécanisme de polymérisation en chaîne et ce, que ce soit sous l'effet de la chaleur ou sous l'effet d'un rayonnement lumineux ou ionisant, les Inventeurs ayant, en effet constaté, dans le cadre de leurs travaux, que le procédé selon l'invention est efficace aussi bien dans le cas d'une résine thermodurcissable que d'une résine photo- ou radiodurcissable.

Toutefois, pour les raisons précédemment exposées, la résine est, de préférence, choisie parmi les résines polymérisables sous rayonnement, et en particulier parmi les résines de type multiacrylates comme les époxy acrylates, les novolaque acrylates et les polyuréthanne acrylates, les résines bis-maléimides et les résines époxydes, les résines époxy acrylates étant particulièrement préférées dans le cas où le matériau composite est destiné à des applications spatiales ou aéronautiques.

Une fois que le greffage sur la surface des fibres des groupes aptes à servir d'agents de transfert de chaîne a été réalisé, les fibres de carbone peuvent soit être immédiatement utilisées dans la fabrication de pièces en matériaux composites, soit être stockées en vue d'une utilisation ultérieure soit encore être conditionnées en vue de leur livraison à des fabricants de pièces en matériaux composites. En effet, le procédé selon l'invention peut aussi bien être mis en oeuvre par les fabricants de fibres de carbone que par leurs utilisateurs.

L'invention a également pour objet un procédé de fabrication d'une pièce en matériau composite comprenant des fibres de carbone et une matrice organique, lequel procédé comprend la mise en contact des fibres avec une résine durcissable par polymérisation en chaîne, puis la polymérisation de la résine, et est caractérisé en ce qu'il comprend de plus la mise en oeuvre d'un procédé tel que décrit précédemment, avant que les fibres ne soient mises en contact avec ladite résine.

Il va de soi que la fabrication de cette pièce en matériau composite peut être réalisée selon toutes les techniques connues de l'homme du métier des matériaux composites comme, par exemple, le moulage par projection simultanée, le moulage sous vide, le moulage par injection basse pression de résine (ou *"Resin Transfert Molding"* - RTM - en langue anglaise), le moulage à la presse à froid *"voie humide"* basse pression, le moulage par injection de compound (ou *"Bulk Molding Compound"* - BMC - en langue anglaise), le moulage par compression de mats préimprégnés ("*Sheet Molding Compound"* - SMC - en langue anglaise), le moulage par enroulement filamentaire, le moulage par centrifugation ou encore le moulage par pultrusion.

D'autres caractéristiques et avantages du procédé pour améliorer l'adhérence de fibres de carbone vis-à-vis d'une matrice organique conforme à l'invention apparaîtront mieux à la lecture du complément de description qui suit, qui se rapporte à des exemples de mise en oeuvre de ce procédé, et qui se réfère aux dessins annexés.

Bien entendu, ces exemples ne sont donnés qu'à titre d'illustrations de l'objet de l'invention et ne constituent

en aucun cas une limitation de cet objet.

BRÈVE DESCRIPTION DES DESSINS

La figure 1 illustre la réaction entre deux fonctions carboxyles situées à la surface d'une fibre de carbone oxydée et non ensimée, et le sulfure de polypropylène en présence d'une amine tertiaire, et montre la structure chimique des deux types de groupes comprenant une fonction thiol présumés se fixer à la surface de la fibre au cours de cette réaction.

La figure 2A montre un cliché pris au microscope électronique à balayage (MEB), à un grandissement de 500x, d'une rupture d'un matériau composite réalisé à partir d'une résine époxy acrylate et de fibres de carbone oxydées et non ensimées.

La figure 2B montre un cliché pris au MEB, à un grandissement de 3500x, d'une rupture d'un matériau composite réalisé en utilisant la même résine époxy acrylate et les mêmes fibres de carbone que celles présentes dans le matériau composite de la figure 2A, mais après avoir greffé des groupes à fonction thiol sur la surface de ces fibres par la réaction illustrée sur la figure 1.

La figure 3 illustre la réaction entre une fonction époxyde située à la surface d'une fibre de carbone ensimée et l'acide thiomalique en présence d'une amine tertiaire.

EXPOSÉ DÉTAILLÉ DE MODES DE MISE EN OEUVRE PARTICULIERS

EXEMPLE 1 :

Cet exemple est relatif au greffage de groupes à fonction thiol sur la surface de fibres de carbone ayant été soumises à une oxydation électrolytique mais n'ayant subi aucun ensimage.

Ces fibres proviennent de la société TENAX qui les commercialise sous la référence IMS5001.

Leurs principales caractéristiques chimiques sont rassemblées dans le tableau 1 ci-après.

TABLEAU 1

| | | | |
|---|---|---|---|
| Rapports atomiques élémentaires | C | O | N |
| | 83% | 15% | 2% |
| Nature et répartition des groupes oxygénés (en % du carbone total) | -COR | -C=O | -COOH |
| | 9,5% | 3,1% | 6,3% |

Le greffage des groupes à fonction thiol sur la surface des fibres est réalisé en faisant réagir les fonctions carboxyles présentes sur cette surface avec du sulfure de propylène, dans un solvant organique et en présence de triéthylamine, selon le schéma réactionnel représenté sur la figure 1.

Le solvant utilisé est le toluène, sa faible polarité permettant, en effet, de limiter l'occurrence de réactions secondaires indésirables.

Ces différents composés sont utilisés à hauteur de :

200 mmoles de sulfure de propylène,
30 mmoles de triéthylamine,
30 mL de toluène,
pour 55 mg de fibres de carbone.

La réaction de greffage est conduite en milieu confiné, sans ajout de pression, à 100°C et pendant 5 heures.

En pratique, on utilise un réacteur en acier, de forme cylindrique, qui est muni d'une pâle d'agitation et d'un collier chauffant permettant de porter et maintenir le milieu réactionnel à la température désirée. Par ailleurs, afin d'éviter que les fibres ne s'emmêlent autour de la pâle d'agitation, elles sont placées dans le réacteur en étant préalablement enfermées dans un sachet de non tissé en polypropylène, perméable mais résistant au toluène.

Au terme des 5 heures de réaction, les fibres sont soumises à deux lavages dans une solution d'acide acétique/toluène (10/90 v/v) pour éliminer la triéthylamine, puis à cinq lavages dans du toluène pur, chaque lavage étant réalisé dans un bécher, sous agitation et pendant 30 minutes.

Le rendement de la réaction de greffage est apprécié en soumettant les fibres à une extraction soxhlet à l'eau pendant 5 heures de manière à éliminer toutes les impuretés susceptibles d'être présentes à la surface des fibres, puis en effectuant une analyse ESCA/XPS de cette surface. Cette analyse montre que la proportion des atomes de soufre présents à la surface des fibres est de 3%.

L'effet du greffage de groupes à fonction thiol sur l'adhérence des fibres vis-à-vis d'une matrice obtenue par polymérisation d'une résine époxy acrylate, en l'espèce la résine EB600 de la société UCB Chemicals, est, lui, apprécié par un test de déchaussement.

Brièvement, ce test de déchaussement consiste à plonger l'extrémité d'un monofilament dans une microgoutte de résine, d'induire la polymérisation de la résine à température ambiante et sous faisceau d'électrons, puis à exercer une contrainte en traction sur l'autre extrémité du monofilament, à la vitesse de 1 mm/min, tout en maintenant la goutte de résine fixe.

On enregistre la force de traction dans le temps. La force de traction maximale enregistrée est considérée comme la force nécessaire au déchaussement du monofilament hors de la goutte de résine durcie.

On détermine la résistance à la rupture interfaciale (plus connue sous l'acronyme anglais IFSS pour *"InterFacial Shear Strength"*) à l'aide de la formule suivante :

$$\tau = \frac{\sigma f d}{2L} = \frac{F}{2\pi r L}$$

dans laquelle :

*d* représente le diamètre du monofilament (en mètre),
*r* représente le rayon du monofilament (en mètre),
*L* représente la longueur de monofilament initialement enchâssée dans la goutte de résine (en mètre),
*F* représente la force nécessaire au déchaussement du monofilament hors de la goutte de résine durcie (en newton), et

$$\sigma f = \frac{F}{\pi r^2} \text{ (en newton/m}^2\text{)}.$$

Le test de déchaussement est réalisé sur plusieurs monofilaments de fibres IMS5001 ayant été greffées de groupes à fonction thiol et plusieurs monofilaments de fibres IMS5001 n'ayant pas été greffées de manière à être significatif.

Les résultats montrent que l'IFSS est de 59 ± 3 MPa dans le cas où les fibres IMS5001 ont été greffées de groupes à fonction thiol alors qu'elle n'est que de 49 ± 4 MPa dans le cas où les fibres IMS5001 ne l'ont pas été.

L'IFSS est donc augmentée de 20% par la présence de fonctions thiols à la surface des fibres.

L'effet positif du greffage des groupes à fonction thiol sur l'adhérence fibres/matrice est, par ailleurs, confirmé par une analyse au MEB de ruptures de matériaux composites comprenant une matrice obtenue par polymérisation de résine EB600 et des fibres IMS5001 greffées ou non de groupes à fonction thiol.

Ces matériaux composites sont réalisés sous forme de plaques unidirectionnelles par :

- imprégnation des fibres par la résine (taux d'imprégnation 40% en masse) ;
- fabrication de plis unidirectionnels (12 plis) par bobinage des fibres imprégnées autour d'un mandrin plat ;
- assemblage des plis par drapage et compactage ;
- polymérisation sous vide, à température ambiante, par 4 passages de 25 kGy.

Comme le montre la figure 2B, qui correspond à un cliché, pris au grandissement de 3500x, d'une rupture d'un matériau composite renfermant des fibres IMS5001 greffées de groupes à fonction thiol, ces dernières présentent des résidus de résine accrochés à leur surface que l'on ne retrouve pas sur les fibres d'un matériau composite renfermant des fibres IMS5001 non greffées de groupes à fonction thiol (figure 2A), et qui témoignent d'une meilleure liaison entre les fibres et la matrice époxy acrylate.

EXEMPLE 2 :

Cet exemple est, lui, relatif au greffage de groupe à fonction thiol sur la surface de fibres de carbone ensimées.
Ces fibres proviennent de la société TORAY qui les commercialise sous la référence T800H40.
Elles présentent un ensimage de type époxyde, et plus spécifiquement de type diglycidyl éther de bisphénol A (DGEBA), ces fibres étant, en effet, destinées à être utilisées principalement avec des résines époxydes.
Le greffage des groupes à fonction thiol sur la surface des fibres est réalisé en faisant réagir les fonctions époxydes présentes sur cette surface avec de l'acide thiomalique et en présence de méthacrylate de diméthylaminoéthyle selon le schéma réactionnel représenté sur la figure 3. Le solvant utilisé est la méthyléthylcétone.
Pour ce faire, les fibres, sous forme d'une bobine, sont imprégnées par un mélange d'acide thiomalique et d'amine, dans un rapport molaire des fonctions amines aux fonctions carboxyles de 0,5%, dilué à 0,7% en masse dans la méthyléthylcétone, puis la bobine imprégnée est soumise à un traitement thermique de 150°C pendant 30 minutes, après une montée en température de 45 minutes.
L'effet du greffage des groupes à fonction thiol sur l'adhérence des fibres vis-à-vis d'une matrice obtenue par polymérisation d'une résine époxy acrylate, en l'espèce la résine EB600, est apprécié en soumettant des matériaux composites réalisés, selon un protocole analogue à celui décrit dans l'exemple 1, à partir de cette résine et de fibres T800H40 greffées ou non de groupes à fonction thiol, à un essai de flexion transverse selon la norme AIRBUS IGC. 04.06.245 OU EN 2582.
Les résultats montrent que le Sigma 2 en flexion est de 70 MPa dans le cas où les fibres T800H40 ont été greffées de groupes à fonction thiol alors qu'il n'est que de 25 MPa dans le cas où les fibres T800H40 ne l'ont pas été.

DOCUMENTS CITES

[1] JP-A-3076869
[2] EP-A-1 484 435
[3] EP-A-0 640 702
[4] JP-B-2002327374
[5] Wu et al., Carbon, 34, 59-67, 1996
[6] Tsubokawa, Carbon, 31, 1 257-1 263, 1993


## Revendications

1. Procédé pour améliorer l'adhérence de fibres de carbone vis-à-vis d'une matrice organique formant avec ces fibres un matériau composite, ce matériau composite étant obtenu par mise en contact des fibres avec une résine durcissable par polymérisation en chaîne, puis polymérisation de la résine, lequel procédé est **caractérisé en ce qu'**il comprend le greffage sur la surface des fibres, avant qu'elles ne soient mises en contact avec la résine, de groupes aptes à servir d'agents de transfert de chaîne pendant la polymérisation de ladite résine.

2. Procédé selon la revendication 1, **caractérisé en ce que** les groupes aptes à servir d'agents de transfert de chaîne sont choisis parmi les groupes carbonés comprenant une fonction -I, -Br, -Cl, -F, -SH, -OH, -NH-, $-NH_2$, -PH-, $-PH_2$ ou =S.

3. Procédé selon la revendication 1 ou la revendication 2, **caractérisé en ce que** les groupes aptes à servir d'agents de transfert de chaîne sont des groupes carbonés comprenant une fonction thiol (-SH).

4. Procédé selon la revendication 1, **caractérisé en ce que** le greffage sur la surface des fibres de carbone des groupes aptes à servir d'agents de transfert de chaîne est réalisé en faisant réagir des groupes fonctionnels présents à la surface de ces fibres avec un composé organique qui, par ouverture de cycle, se lie de façon covalente aux groupes fonctionnels des fibres et génère simultanément un groupe apte à servir d'agent de transfert de chaîne.

5. Procédé selon la revendication 4, **caractérisé en ce que**, les groupes fonctionnels présents à la surface des fibres de carbone étant des groupes carboxyles, le composé organique est un épisulfure qui génère un groupe comprenant une fonction thiol.

6. Procédé selon la revendication 5, **caractérisé en ce que** l'épisulfure est choisi parmi le sulfure de propylène, le

sulfure d'éthylène, le sulfure de cyclohexène, l'épithiodécane, l'épithiododécane et le 7-thiabicyclo[4.1.0]heptane.

**7.** Procédé selon la revendication 5 ou la revendication 6, **caractérisé en ce que** la réaction des groupes carboxyles présents à la surface des fibres de carbone avec l'épisulfure est réalisée à chaud et en présence d'un catalyseur, de préférence une amine tertiaire.

**8.** Procédé selon l'une quelconque des revendications 5 à 7, **caractérisé en ce que** la réaction des groupes carboxyles présents à la surface des fibres de carbone avec l'épisulfure est suivie d'une ou plusieurs opération de lavage des fibres, puis d'une ou plusieurs opérations de séchage des fibres.

**9.** Procédé selon la revendication 3, **caractérisé en ce que** le greffage sur la surface des fibres de carbone des groupes aptes à servir d'agents de transfert de chaîne est réalisé en faisant réagir des groupes fonctionnels présents à la surface de ces fibres avec un composé organique qui comporte une fonction chimique apte à réagir avec lesdits groupes fonctionnels, et un groupe apte à servir d'agent de transfert de chaîne.

**10.** Procédé selon la revendication 9, **caractérisé en ce que** le composé organique a pour groupe apte à servir d'agent de transfert de chaîne, un groupe comprenant une fonction thiol.

**11.** Procédé selon la revendication 10, **caractérisé en ce que**, les groupes fonctionnels présents à la surface des fibres de carbone étant des fonctions époxydes, le composé organique a pour fonction chimique, une fonction carboxyle ou une fonction phénol.

**12.** Procédé selon la revendication 11, **caractérisé en ce que** la réaction des groupes époxydes présents à la surface des fibres .de carbone avec le composé organique ayant une fonction carboxyle ou phénol est réalisée à chaud, sous vide et en présence d'un catalyseur, de préférence une amine tertiaire.

**13.** Procédé selon la revendication 11 ou la revendication 12, **caractérisé en ce que** le composé organique est choisi parmi l'acide thiomalique, l'acide thioglycolique, l'acide thiolactique, l'acide 3-mercaptopropionique, l'acide 11-mercaptoundécanoïque, l'acide 16-mercaptohexadécanoïque, l'acide 2-mercaptonicotinique, l'acide 6-mercaptonicotinique et l'acide 2-mercapto-4-méthyl-5-thiazoleacétique.

**14.** Procédé selon l'une quelconque des revendications précédentes, **caractérisé en ce que** la résine est choisie parmi les résines polymérisables sous rayonnement lumineux ou ionisant.

**15.** Procédé selon l'une quelconque des revendications précédentes, **caractérisé en ce que** la résine est choisie parmi les résines époxy acrylates, les novolaque acrylates, les polyuréthanne acrylates, les résines bis-maléimides et les résines époxydes.

**16.** Procédé selon la revendication 15, **caractérisé en ce que** la résine est une résine époxy acrylate.

**17.** Procédé de fabrication d'une pièce en matériau composite comprenant des fibres de carbone et une matrice organique, lequel procédé comprend la mise en contact des fibres avec une résine durcissable par polymérisation en chaîne et la polymérisation de la résine, et est **caractérisé en ce qu'**il comprend de plus la mise en oeuvre d'un procédé selon l'une quelconque des revendications 1 à 16 avant que les fibres ne soient mises en contact avec ladite résine.

## Claims

**1.** Process for improving the adhesion of carbon fibres with regard to an organic matrix forming a composite material with these fibres, this composite material being obtained by bringing the fibres into contact with a resin which can be cured by chain polymerization and then polymerizing the resin, which process is **characterized in that** it comprises the grafting, to the surface of the fibres, before they are brought into contact with the resin, of groups capable of acting as chair transfer agents during the polymerisation of said resin.

**2.** Process according to Claim 1, **characterized in that** the groups capable of acting as chain transfer agents are chosen from carbon-based groups comprising an -I, -Br, -Cl, -F, -SH, -OH, -NH-, $-NH_2$, -PH-, $-PH_2$ or =S functional group.

3. Process according to Claim 1 or Claim 2, **characterized in that** the groups capable of acting as chain transfer agents are carbon-based groups comprising a thiol (-SH) functional group.

4. Process according to Claim 1, **characterized in that** the grafting to the surface of the carbon fibres of the groups capable of acting as chain transfer agents is carried out by reacting functional groups present at the surface of these fibres with an organic compound which, by ring opening, becomes covalently bonded to the functional groups of the fibres and simultaneously generates a groups capable of acting as chain transfer gent

5. Process according to Claim 4, **characterized in that**, the functional groups present as the surface of the carbon fibres being carboxyl groups, the organic compound is an episulphide which generates a group comprising a thiol functional group.

6. Process according to Claim 5, **characterized in that** the episulphide is chosen from propylene sulphide, ethylene sulphide, cyclohexene, epithiodecane, epithiododecane and 7-thiabicyclo-[4.1.0]heptane.

7. Process according to Claim 5 or Claim 6, **characterized in that** the reaction of the carboxyl groups present at the surface of the carbon fibres with the episulphide is carried out under hot conditions and in the presence of a catalyst, preferably a tertiary amine.

8. Process according to any one of Claims 5 to 7, **characterized in that** the reaction of the carboxyl groups present at the surface of the carbon fibres with the episulphide is followed by one or more operations of washing the fibres and then by one or more operations of drying the fibres.

9. Process according to Claim 3, **characterized in that** the grafting to the surface of the carbon fibres of the groups capable of acting as chain transfer agents is carried out by reacting functional groups present on the surface of these fibres with an organic compound which comprises a chemical functional group capable of reacting with said functional groups and a group capable of acting as chain transfer agent.

10. Process according to Claim 9, **characterized in that** the organic compound has, as a group capable of acting as chain transfer agent, a group comprising a thiol functional group.

11. Process according to Claim 10, **characterized in that**, the functional groups present at the surface of the carbon fibres being epoxide functional groups, the organic compound has, as chemical functional group, a carboxyl functional group or a phenol functional groups.

12. Process according to Claim 11, **characterized in that** the reaction of the epoxide groups present at the surface of the carbon fibres with the organic compound having a carboxyl or phenol functional group is carried out under hot conditions, under vacuum, and in the presence of a catalyst, preferably a tertiary amine.

13. Process according to Claim 11 or Claim 12, **characterized in that** the organic compound is chosen from thiomalic acid, thioglycolic acid, thiolactic acid, 3-mercaptopropionic acid, 11-mercaptoundecanoic acid, 16-mercaptohexadecanoic acid, 2-mercaptonicotinic acid, 6-mercaptonicotinic acid and 2-mercapto-4-methyl-5-thiazolacetic acid.

14. Process according to any one of the preceding claims, **characterized in that** the resin is chosen from resins which can be polymerized under light or ionizing radiation.

15. Process according to any one of the preceding claims, **characterized in that** the resin is chosen from epoxy acrylate resins, novolac acrylates, polyurethane acrylates, bismaleimide resins and epoxide resins.

16. Process according to Claim 15, **characterized in that** the resin is an epoxy acrylate resin.

17. Process for the manufacture of a component made of composite material comprising carbon fibres and an organic matrix, which process comprises bringing the fibres into contact with a resin which can be cured by chain polymerization and polymerizing the resin and is **characterized in that** it furthermore comprises the implementation of a process according to any one of Claims 1 to 16 before the fibres are brought into contact with said resin.

## Patentansprüche

1. Verfahren zur Verbesserung der Haftung von Carbonfasern an einer organischen Matrix, die mit diesen Fasern ein Verbundmaterial bildet, wobei das Verbundmaterial erhalten wird, indem die Fasern mit einem Harz, das durch Kettenpolymerisation gehärtet werden kann, in Kontakt gebracht werden und das Harz dann polymerisiert wird, wobei das Verfahren **dadurch gekennzeichnet ist, dass** es das Pfropfen von Gruppen, die während der Polymerisation des Harzes als Kettenübertragungsmittel dienen können, auf die Oberfläche der Fasern, bevor sie mit dem Harz in Kontakt gebracht werden, umfasst.

2. Verfahren gemäß Anspruch 1, **dadurch gekennzeichnet, dass** die Gruppen, die als Kettenübertragungsmittel dienen können, aus Kohlenstoffgruppen, die eine Funktion -I, -Br, -Cl, -F, -SH, -OH, -NH-, $-NH_2$, - PH-, $-PH_2$ oder =S umfassen, ausgewählt sind.

3. Verfahren gemäß Anspruch 1 oder Anspruch 2, **dadurch gekennzeichnet, dass** die Gruppen, die als Kettenübertragungsmittel dienen können, Kohlenstoffgruppen, die eine Thiolfunktion (-SH) umfassen, sind.

4. Verfahren gemäß Anspruch 1, **dadurch gekennzeichnet, dass** das Pfropfen von Gruppen, die als Kettenübertragungsmittel dienen können, auf die Oberfläche der Carbonfasern durchgeführt wird, indem funktionelle Gruppen, die an der Oberfläche der Fasern vorhanden sind, mit einer organischen Verbindung umgesetzt werden, die durch Ringöffnung kovalent an die funktionellen Gruppen der Fasern gebunden wird und gleichzeitig eine Gruppe erzeugt, die als Kettenübertragungsmittel dienen kann.

5. Verfahren gemäß Anspruch 4, **dadurch gekennzeichnet, dass** die an der Oberfläche der Carbonfasern vorhandenen funktionellen Gruppen Carboxylgruppen sind, die organische Verbindung ein Episulfid ist, das eine Gruppe erzeugt, die eine Thiolfunktion umfasst.

6. Verfahren gemäß Anspruch 5, **dadurch gekennzeichnet, dass** das Episulfid aus Propylensulfid, Ethylensulfid, Cyclohexensulfid, Epithiodecan, Epithiododecan und 7-Thiabicyclo[4,1.0]heptan ausgewählt ist.

7. Verfahren gemäß Anspruch 5 oder Anspruch 6, **dadurch gekennzeichnet, dass** die Umsetzung der an der Oberfläche der Carbonfasern vorhandenen Carboxylgruppen mit dem Episulfid bei Wärme und in Anwesenheit eines Katalysators, bevorzugt eines tertiären Amins, durchgeführt wird.

8. Verfahren gemäß einem der Ansprüche 5 bis 7, **dadurch gekennzeichnet, dass** auf die Umsetzung der an der Oberfläche der Carbonfasern vorhandenen Carboxylgruppen mit dem Episulfid ein oder mehrere Arbeitsgänge Waschen der Fasern und dann ein oder mehrere Arbeitsgänge Trocknen der Fasern folgen.

9. Verfahren gemäß Anspruch 3, **dadurch gekennzeichnet, dass** das Pfropfen von Gruppen, die als Kettenübertragungsmittel dienen können, auf die Oberfläche der Carbonfasern durchgeführt wird, indem funktionelle Gruppen, die an der Oberfläche der Fasern vorhanden sind, mit einer organischen Verbindung umgesetzt werden, die eine chemische Funktion, die mit den funktionellen Gruppen umgesetzt werden kann, und eine Gruppe, die als Kettenübedragungsmittel dienen kann, aufweist.

10. Verfahren gemäß Anspruch 9, **dadurch gekennzeichnet, dass** die organische Verbindung als Gruppe, die als Kettenübertragungsmittel dienen kann, eine Gruppe, die eine Thiolfunktion umfasst, aufweist.

11. Verfahren gemäß Anspruch 10, **dadurch gekennzeichnet, dass** die an der Oberfläche der Carbonfasern vorhandenen funktionellen Gruppen Epoxidfunktionen sind, die organische Verbindung als chemische Funktion eine Carboxylfunktion oder eine Phenolfunktion aufweist.

12. Verfahren gemäß Anspruch 11, **dadurch gekennzeichnet, dass** die Umsetzung der an der Oberfläche der Carbonfasern vorhandenen Epoxidgruppen mit der organischen Verbindung, die eine Carboxyl- oder Phenolfunktion aufweiset, bei Wärme, unter Vakuum und in Anwesenheit eines Katalysators, bevorzugt eines tertiären Amins, durchgeführt wird.

13. Verfahren gemäß Anspruch 11 oder Anspruch 12, **dadurch gekennzeichnet, dass** die organische Verbindung aus Thioäpfelsäure, Thioglycolsäure, Thiomilchsäure, 3-Mercaptopropionsäure, 11-Mercaptoundecansäure, 16-Mercapto-hexadecansäure, 2-Mercaptonicotinsäure, 6-Mercaptonicotinsäure und 2-Mercapto-4-methyl-5-thiazofessigsäure ausgewählt ist.

**14.** Verfahren gemäß einem der vorhergenenden Ansprüche, **dadurch gekennzeichnet, dass** das Harz aus Harzen, die unter Licht- oder ionisierender Strahlung polymerisiert werden können, ausgewählt ist.

**15.** Verfahren gemäß einem der vorhergenenden Ansprüche, **dadurch gekennzeichnet, dass** das Harz aus Epoxyacrylatharzen, Novolacacrylaten, Polyurethanacrylaten, Bismaleimidharzen und Epoxidharzen ausgewählt ist.

**16.** Verfahren gemäß Anspruch 15, **dadurch gekennzeichnet, dass** das Harz ein Epoxyacrylatharz ist.

**17.** Verfahren zur Herstellung eines Artikels aus Verbundmaterial, das Carbonfasern und eine organische Matrix umfasst, wobei das Verfahren das Inkontaktbringen der Fasern mit einem Harz, das durch Kettenpolymerisation gehärtet werden kann, und das Polymerisieren des Harzes umfasst, und das **dadurch gekennzeichnet ist, dass** es weiterhin die Durchführung eines Verfahrens gemäß einem der Ansprüche 1 bis 16, bevor die Fasern mit dem Harz in Kontakt gebracht werden, umfasst.

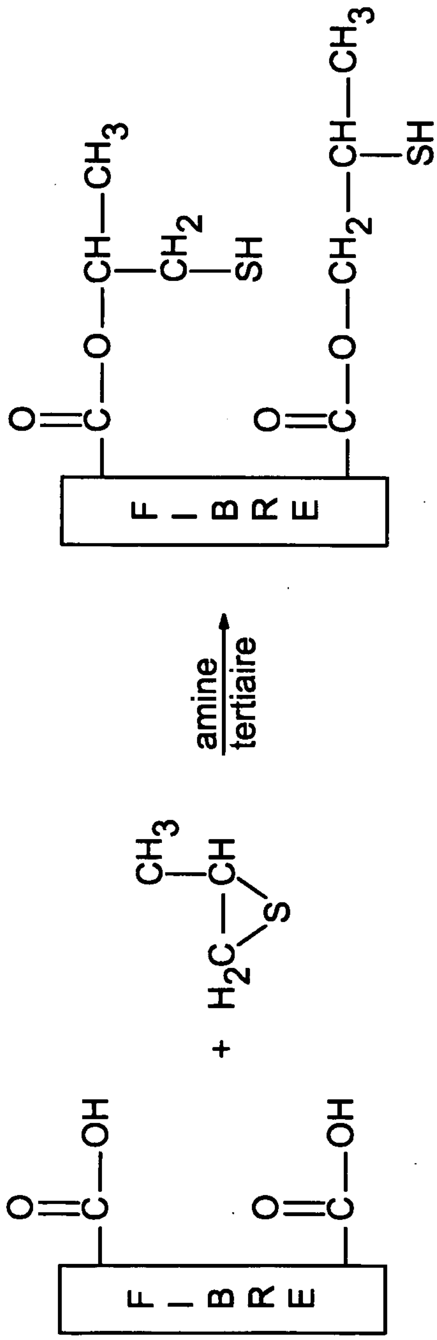


FIG. 1

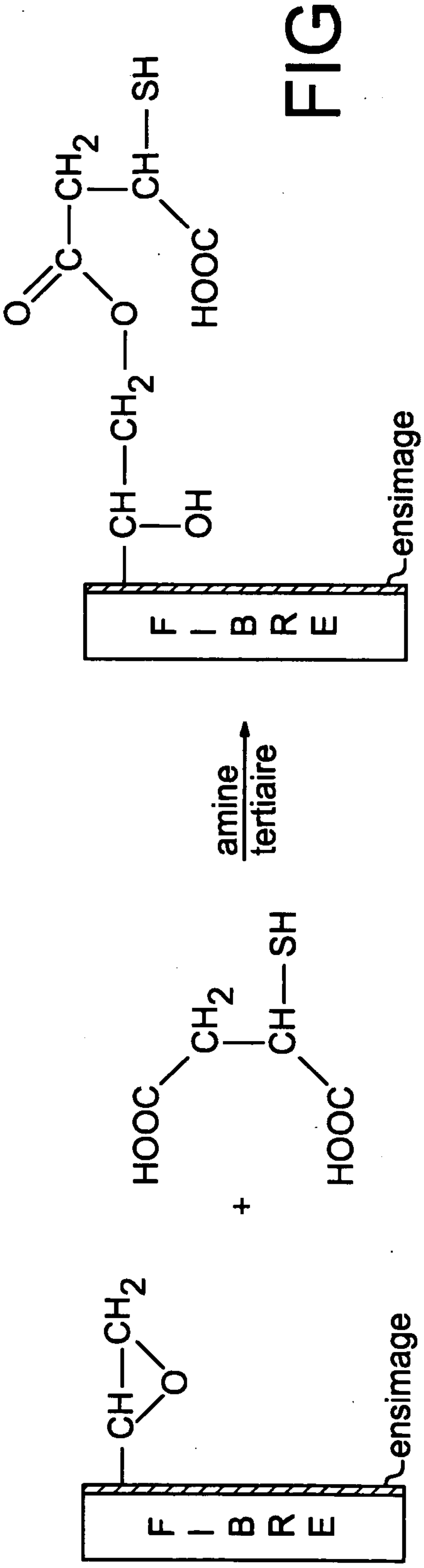


FIG. 3

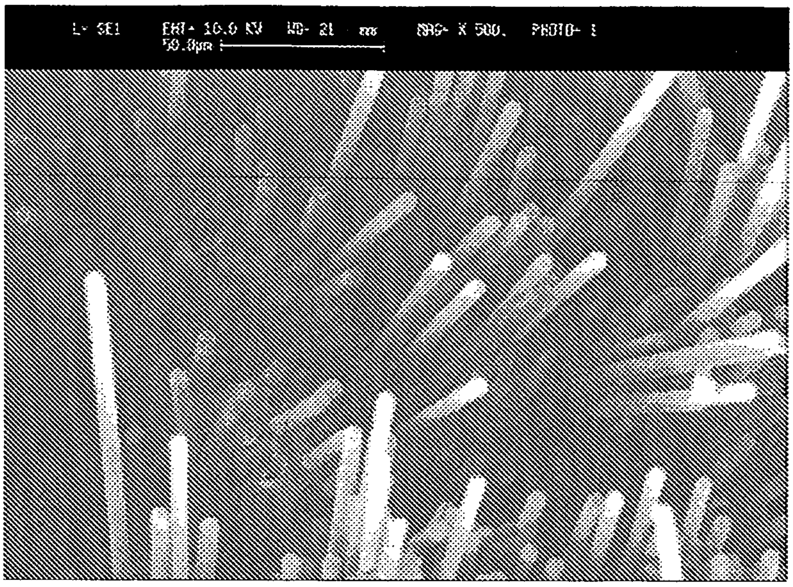

FIG. 2A

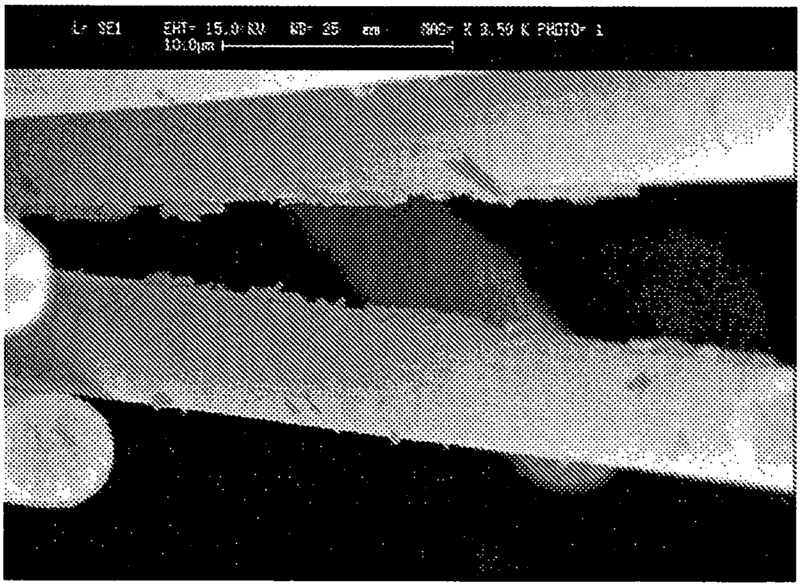

FIG. 2B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- JP 3076869 A
- EP 1484435 A
- EP 0640702 A
- JP 2002327374 B


### Littérature non-brevet citée dans la description


- **Wu et al.** *Carbon,* 1996, vol. 34, 59-67
- **Tsubokawa.** *Carbon,* 1993, vol. 31, 1 257-1 263